# EUROPÄISCHE PATENTANMELDUNG

(11) **EP 2 116 916 A1**
(43) Veröffentlichungstag der Anmeldung: **11.11.2009**
(21) Anmeldenummer: 09006273.8
(22) Anmeldetag: 08.05.2009
(51) Int. Cl.: G06F 1/16, G06F 1/20

(54) **Träger mit einer Computeraufnahme für einen Rechner**

(30) Priorität: 09.05.2008 DE 102008023084; 13.11.2008 DE 102008057271
(71) Anmelder: bofrost* Dienstleistungs GmbH und Co. KG, 47638 Straelen (DE)
(72) Erfinder: Schäuble, Manfred, 47638 Straelen (DE)
(74) Vertreter: Castell, Klaus

(57) **Zusammenfassung**

Die Erfindung bezieht sich auf einen Träger mit einer Computeraufnahme für einen Rechner, wobei dieser eine Versorgungsaufnahme für eine Stromversorgung aufweist. Mit diesem Träger ist es möglich, den Rechner an den Strom und eine weitergehende Dockingstation anzuschließen, ohne ihn aus dem Träger zu nehmen. Insbesondere ist es auch möglich, weitere Elemente wie ein Geruchsmodul, Lautsprecher oder ein Kassiersystem in den Träger aufzunehmen. Auch eine Belüftung kann vorgesehen sein.

## Beschreibung

Die Erfindung bezieht sich auf einen Träger mit einer Computeraufnahme für einen Rechner.

Träger für Rechner sind zahlreich aus dem Stand der Technik bekannt. Um einen Rechner in einen solchen aus dem Stand der Technik bekannten Träger einzulegen, wird der Rechner in den Träger eingelegt und der Träger wird verschlossen. Dieser Vorgang ist sehr zeitaufwendig, setzt in der Regel das Abschalten des Rechners voraus und birgt die Gefahr der Beschädigung des Rechners durch das Einlegen oder durch Herunterfallen. Ist der Akku des Rechners leer, ist es erneut notwendig den Rechner aus dem Träger zu nehmen, um den leeren Akku entfernen zu können und durch einen geladenen Reserveakku zu ersetzen. Auch beim Herausnehmen sind zahlreiche Bedienschritte in umgekehrter Reihenfolge notwendig. Zudem muss der Rechner nach dem Akkutausch wieder zeitaufwendig und mit dem Risiko einer Beschädigung in den Träger eingesetzt werden.

Ziel vorliegender Erfindung ist es daher, einen verbesserten Träger mit einer Computeraufnahme für einen Rechner zur Verfügung zu stellen.

Diese Aufgabe wird vorliegend durch einenTräger gelöst, der eine Versorgungsaufnahme für eine Stromversorgung aufweist. Dadurch ist es möglich, einen Rechner ohne Entnahme aus dem Träger mit einer neuen Stromversorgung zu verbinden. Das zeitaufwendige und gefährliche Verfahren bestehend aus Entnahme und Wiedereinsetzen des Rechners in den Träger entfällt hierdurch beim Wechseln eines Akkus vollständig.

Auch ist es so möglich weitere Geräte außer dem Rechner in den Träger zu integrieren, durch die entnehmbare Stromversorgung zu versorgen und diese einfach, sobald sie leer ist wieder auszutauschen.

Der Träger kann eine selbsttragende Konstruktion aufweisen. Beim Tragen auf den Träger einwirkende Kräfte verteilen sich gleichmäßig auf die Konstruktion des Trägers und greifen nicht ungleichmäßig am Rechner an.

Vorteilhaft ist, wenn die Computeraufnahme das Gehäuse eines Computers aufnimmt. Dadurch kann der Computer einfach mit Gehäuse in den Träger eingesetzt werden. Der Rechner kann jederzeit aus dem Träger wieder ausgebaut werden und in den nächsten Träger eingebaut werden. Zudem ist die Gefahr einer Beschädigung geringer, wenn das Gehäuse des Rechners zum Einbau in den Träger nicht demontiert werden muss.

Von Vorteil ist, wenn die Computeraufnahme wannenförmig ist. Eine Wannenform entspricht als Gegenstück den meisten gebräuchlichen Computergehäusen.

Die Computeraufnahme kann eine Wanne sein und die Wanne kann nach innen übergreifende Dichtelemente aufweisen. Dadurch passt der Rechner in die Wanne und die übergreifenden Dichtelemente sorgen dafür, dass zwischen Rechner und Wanne keine Schmutzpartikel eindringen können.

Vorteilhaft ist weiter wenn der Träger eine Systemaufnahme für ein Kassiersystem aufweist. Dadurch ist es dem Benutzer des Trägers möglich, gleichzeitig den Rechner zu bedienen und mit dem Kassiersystem parallel Geld einzunehmen. Auch können der Rechner und das Kassiersystem miteinander verbunden werden und die Informationen des Kassiersystems direkt in den Rechner eingespeist werden und/oder das Kassiersystem über den Rechner angesteuert werden.

Nach einem weiteren Aspekt der Erfindung kann der Träger eine Modulaufnahme für ein Geruchsmodul aufweisen. Dies hat den Vorzug, dass der Träger beispielsweise zu Werbezwecken bestimmte Duftstoffe in die Luft abgeben kann.

Weiter kann der Träger eine Prospektaufnahme für Prospekte oder Flyer aufweisen, da der Benutzer diese dann nicht mehr getrennt transportieren muss, sondern stets griffsbereit dabei hat.

Weiter kann der Träger ein mindestens um eine Aufnahme umlaufendes Gehäuse aufweisen. So ist es möglich, in dieses Gehäuse unterschiedliche Bauelemente wie beispielsweise Lautsprecher einzubauen.

Vorteilhaft ist, wenn das Gehäuse eine Oberfläche aus geschäumtem Material aufweist. Eine solche Oberfläche ist zusammendrückbar und schützt daher bei Stößen sowohl den Benutzer als auch den Rechner.

Weiter kann das Gehäuse ein hartes und weiches Material aufweisen. Dies hat den Vorteil, dass das harte Material den Rechner vor Einwirkungen schützt und gleichzeitig das weiche Material den Benutzer vor Verletzungen bewahrt.

Vorteilhaft ist weiterhin, wenn das Gehäuse des Trägers eine Bohrung zum Anschluss des Rechners an eine Dockingstation aufweist. So kann der Rechner an die Dockingstation angeschlossen werden, ohne dass es nötig ist, ihn aus dem Träger zu entnehmen. Der Rechner kann so jederzeit im Träger verbleiben. Die komplizierten Bedienschritte bei Einbau und Ausbau des Rechners müssen nur einmalig durchgeführt werden. Sobald der Rechner in den Träger eingebaut ist, kann er im diesem leicht transportiert werden.

Das Gehäuse kann weiter eine Luftzuführung und eine Luftabführung aufweisen, um so die Kühlung des eingebauten Rechners sicherzustellen.

Vorzugsweise ist die Luftzuführung der Luftabführung gegenüberliegend angeordnet. Die Luft kann so an einer Stelle zugeführt werden und am Rechner vorbeigeleitet werden und an der gegenüberliegenden Seite wieder abgeführt werden.

Von Vorteil ist dabei, wenn die Luftzuführung eine kleinere freie Durchgangsfläche als die Luftabführung aufweist, da die Einengung des Strömungsquerschnitts eine Geschwindigkeitserhöhung des Luftstromes zur Folge hat (sog. Düseneffekt).

Das Gehäuse kann eine Metallplatte aufweisen. Durch den höheren Wärmedurchgangswert des Metalls wird die Wärmeableitung der Abwärme des Rechners verbessert.

Vorteilhaft ist, wenn das Gehäuse einen Lüftungskanal aufweist, der von einer Luftzuführung in einen Spalt zwischen Computeraufnahme und Metallplatte und weiter zur Luftabführung reicht. So wird der Luftstrom an der die Wärme ableitenden Metallplatte vorbeigeführt und die Kühlung dadurch optimiert.

Der Lüftungskanal kann Luft an einem Geruchsmodul entlangführen. Auf diese Weise wird der Geruchsstoff in den kontinuierlichen Kühlluftstrom abgegeben und so in der Umgebung des Trägers verteilt.

Vorteilhafterweise weist die Luftzuführung einen Ventilator auf. So können größere Mengen an Luft beispielsweise zur Kühlung am Rechner oder auch zur Aufnahme der Duftstoffe am Geruchsmodul vorbeigeblasen werden.

Dabei ist es möglich, den Ventilator außerhalb des Gehäuses anzuordnen. Dies hat den Vorteil, dass eine kleinere Bauweise des Gehäuses selbst möglich wird.

Es ist weiter von Vorteil, wenn der Ventilator vom Computer angesteuert ist. Dies erlaubt es, den Ventilator nur dann in Betrieb zu nehmen, wenn auch der Computer in Betrieb ist. Dadurch wird ein energiesparender Aufbau des Trägers möglich.

Es ist weiter vorteilhaft, wenn der Ventilator abhängig von der Temperatur im Computer geregelt ist. Steigt die Temperatur des Computers wird eine stärkere Kühlleistung benötigt und ein größerer Luftdurchsatz durch schnelleres Drehen des Ventilators kann hier Abhilfe schaffen. Benötigt der Computer weniger Kühlung, da er eine niedrige Temperatur aufweist, ist es sinnvoll, die Ventilatorgeschwindigkeit zu reduzieren. So wird keine unnötige Energie zur Umwälzung der Luft verwendet, wenn keine Kühlleistung notwendig ist.

Es ist weiter vorteilhaft, wenn in der Wandung des Gehäuses Kabel geführt sind. Diese verbinden die Geräte untereinander, so beispielsweise den Rechner mit dem Ventilator, dem Geruchsmodul und/oder dem Kassiersystem und ermöglichen so eine Steuerung der Geräte.

Weiter von Vorteil ist, wenn in der Wandung des Gehäuses eine Antenne angeordnet ist. Diese Antenne kann beispielsweise als Antenne für ein Navigationssystem zur Ortung der Position verwendet werden. Durch die Anordnung der Antenne im Gehäuse kann diese weder abbrechen noch stellt sie eine Verletzungsgefahr für einen Benutzer dar.

Im Folgenden wird die Erfindung anhand der Zeichnung näher erläutert. Hierbei zeigen
- Figur 1: eine dreidimensionale schematische Draufsicht auf die Oberseite eines Trägers
- Figur 2: eine schematische Draufsicht auf die Rückseite des Trägers
- Figur 3: eine schematische Draufsicht auf die Oberseite des Trägers
- Figur 4: eine schematische Draufsicht auf die rechte Seite des Trägers.

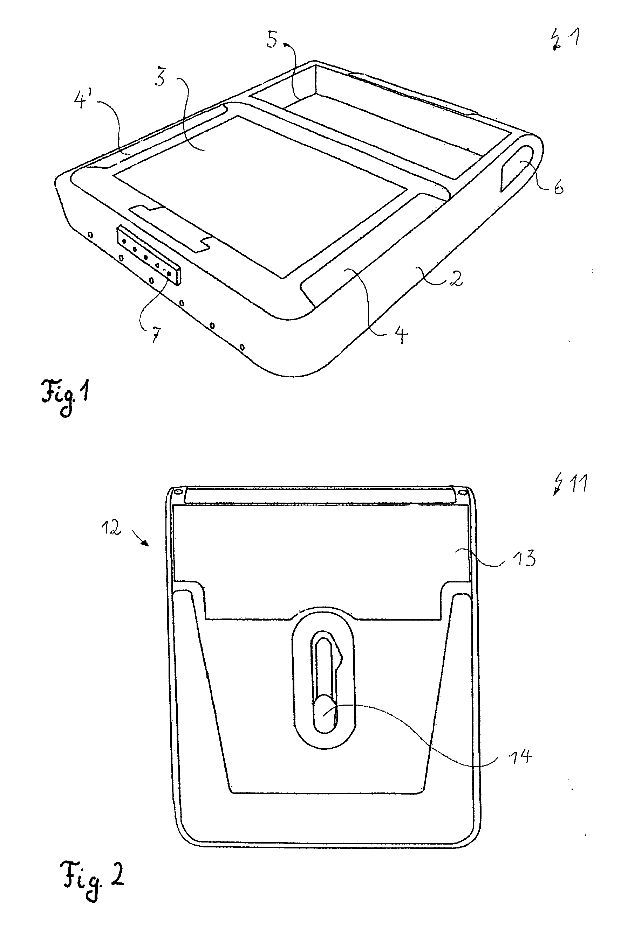

Figur 1 zeigt einen Träger 1 mit einem Gehäuse 2 mit einer Aufnahme für einen Rechner 3. Durch übergreifende Dichtelemente 4 und 4' wird das Eindringen von Schmutz zwischen dem Rechner 3 und dem Gehäuse 2 verhindert. Der Träger 1 weist eine Modulaufnahme 5 auf, in die unterschiedliche Module eingesetzt werden können, beispielsweise Lautsprecher oder ein Geruchsmodul. Auf der rechten Seite des Trägers ist eine Luftzuführung 6 sichtbar. Am unteren Ende ist der Anschluss zur Dockingstation 7 sichtbar.
Auf der in Figur 2 dargestellten Rückseite des Trägers 11 befindet sich ein Fach 12 mit einer Klappe 13 und einem Schieber 14, der zum Öffnen der Klappe 13 nach oben geschoben werden kann. Die Klappe 13 kann ein Scharnier aufweisen. Hierzu kann als Material für die Klappe eine Folie, die zwischen Aluplatten angeordnet und mit diesen verbunden ist, verwendet werden. An der Stelle, an der die Klappe 13 sich abwinkeln soll, sind die Aluplatten unterbrochen. Wird nun die Klappe 13 über diese Stelle nach oben aus dem Gehäuse geschoben, knickt der dann nur noch durch die Folie gehaltene Klappenteil nach unten weg. Bei nunmehr geöffneter Klappe können aus dem Fach 12 die in dieses eingelegten Elemente, beispielsweise Prospekte, entnommen werden.

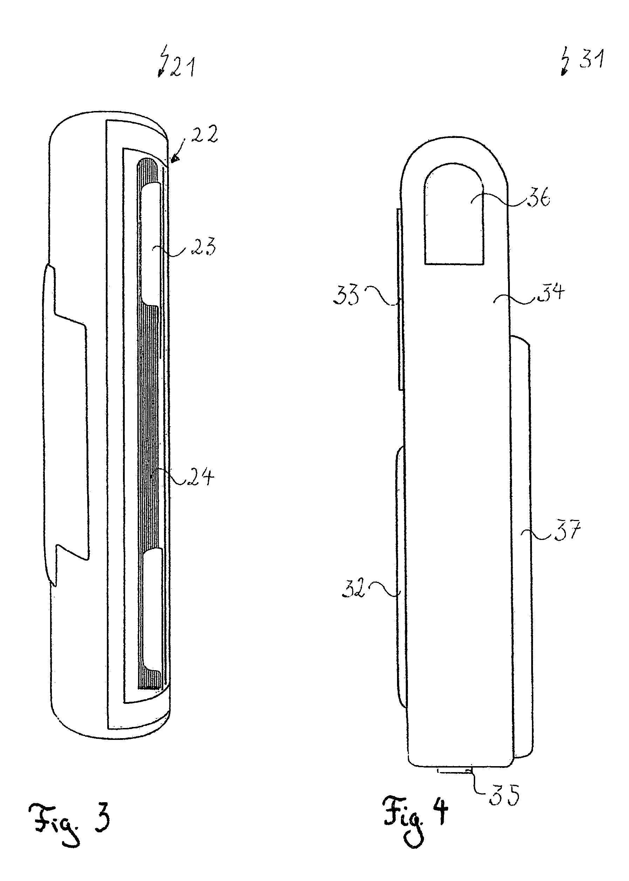

In der Ansicht eines Trägers 21 in Figur 3 ist das Fach 22 von oben sichtbar. Die Klappe 23 weist zwei nach oben zeigende Halteelemente auf, die die Prospekte 24 vor dem Herausfallen sichern.
Figur 4 zeigt den Träger 31 in Seitenansicht. Hierbei sind der Rechner 32 sowie ein Modul 33 als leicht über das Gehäuse 34 herausstehend sichtbar. Am unteren Ende ist der Anschluss an eine Dockingstation 35 abgebildet. Durch den Lüftungsschacht 36 wird Luft zum Kühlen des Rechners 31 in das Gehäuse 34 geleitet. Auf der Rückseite ( in der Figur 4 auf der rechten Seite des Trägers dargestellt) ist auch die Klappe zur Lagerung der Prospekte 35 sichtbar.

## Patentansprüche

1. Träger mit einer Computeraufnahme für einen Rechner, ***dadurch gekennzeichnet, dass*** er eine Versorgungsaufnahme für eine Stromversorgung aufweist.

2. Träger nach Anspruch 1, ***dadurch gekennzeichnet, dass*** der Träger eine selbsttragende Konstruktion aufweist.

3. Träger nach Anspruch 1 oder 2, ***dadurch gekennzeichnet, dass*** die Computeraufnahme das Gehäuse eines Computers aufnimmt.

4. Träger nach einem der Ansprüche 1 bis 3, ***dadurch gekennzeichnet, dass*** die Computeraufnahme wannenförmig ist.

5. Träger nach einem der vorhergehenden Ansprüche, ***dadurch gekennzeichnet, dass*** er eine Prospektaufnahme für Prospekte oder Flyer aufweist.

6. Träger nach einem der vorhergehenden Ansprüche, ***dadurch gekennzeichnet, dass*** er ein um mindestens eine Aufnahme umlaufendes Gehäuse aufweist.

7. Träger nach Anspruch 6, ***dadurch gekennzeichnet, dass*** das Gehäuse ein hartes und ein weiches Material aufweist.

8. Träger nach einem der Ansprüche 6 bis 7, ***dadurch gekennzeichnet, dass*** das Gehäuse eine Luftzuführung und eine Luftabführung aufweist, wobei die Luftzuführung der Luftabführung gegenüberliegend angeordnet ist und die Luftzuführung eine kleinere freie Durchgangsfläche als die Luftabführung aufweist.

9. Träger nach einem der Ansprüche 6 bis 8, ***dadurch gekennzeichnet, dass*** das Gehäuse eine Metallplatte aufweist.

10. Träger nach einem der Ansprüche 6 bis 9, ***dadurch gekennzeichnet, dass*** das Gehäuse einen Lüftungskanal aufweist, der von einer Luftzuführung in einen Spalt zwischen einer Computeraufnahme und einer Metallplatte und weiter zur Luftabführung reicht.

11. Träger nach einem der Ansprüche 6 bis 9, ***dadurch gekennzeichnet, dass*** die Luftzuführung einen Ventilator aufweist.

12. Träger nach Anspruch 11, ***dadurch gekennzeichnet, dass*** der Ventilator außerhalb des Gehäuses angeordnet ist.

13. Träger nach Anspruch 11 oder 12, ***dadurch gekennzeichnet, dass*** der Ventilator vom Computer angesteuert ist.

14. Träger nach einem der Ansprüche 11 bis 13, ***dadurch gekennzeichnet, dass*** der Ventilator abhängig von der Temperatur im Computer geregelt ist.

15. Träger nach einem der Ansprüche 6 bis 14, ***dadurch gekennzeichnet, dass*** in der Wandung des Gehäuses eine Antenne angeordnet ist.
